# FASCICULE DE BREVET EUROPEEN

(11) **EP 3 853 694 B1**
(45) Date de publication et mention de la délivrance du brevet: **23.10.2024**
(21) Numéro de dépôt: 19795255.9
(22) Date de dépôt: 19.09.2019
(51) Int. Cl.: G06F 3/01, G06T 19/00, G05B 19/409, G06T 19/20, G06T 15/04

(54) **PROCEDE ET SYSTEME DE VISUALISATION EN REALITE AUGMENTEE**
VERFAHREN UND SYSTEM FÜR VISUALISIERUNG DER ERWEITERTEN REALITÄT
METHOD AND SYSTEM FOR AUGMENTED REALITY VISUALISATION

(30) Priorité: 21.09.2018 FR 1858576
(43) Date de publication de la demande: 28.07.2021
(73) Titulaire: Diotasoft, 92160 Antony (FR)
(72) Inventeur: MONTANDON, Christophe, 33170 GRADIGNAN (FR); DELHOMMEAU, Jean-Baptiste, 33320 EYSINES (FR)
(74) Mandataire: Atout PI Laplace
(86) Numéro de dépôt international: PCT/FR2019/052196
(87) Numéro de publication internationale: WO 2020/058642

(56) Documents cités:
- US-A1- 2017 140 552
- US-A1- 2018 108 325
- US-A1- 2018 197 336
- COSCO F ET AL: "Visuo-Haptic Mixed Reality with Unobstructed Tool-Hand Integration", IEEE TRANSACTIONS ON VISUALIZATION AND COMPUTER GRAPHICS, IEEE SERVICE CENTER, LOS ALAMITOS, CA, US, vol. 19, no. 1, 1 January 2013 (2013-01-01), pages 159 - 172, XP011490514, ISSN: 1077-2626, DOI: 10.1109/TVCG.2012.107
- "Medical Image Computing and Computer-Assisted Interventation - MICCAI'98", vol. 1496, 1 January 1998, SPRINGER-VERLAG, Berlin/Heidelberg, ISBN: 978-3-54-065136-9, article HENRY FUCHS ET AL: "Augmented reality visualization for laparoscopic surgery", pages: 934 - 943, XP055046301, DOI: 10.1007/BFb0056282
- HERVE J-Y ET AL: "Dynamic registration for augmented reality in telerobotics applications", SYSTEMS, MAN, AND CYBERNETICS, 2000 IEEE INTERNATIONAL CONFERENCE ON NASHVILLE, TN, USA 8-11 OCT. 2000, PISCATAWAY, NJ, USA,IEEE, US, vol. 2, 8 October 2000 (2000-10-08), pages 1348 - 1353, XP010524844, ISBN: 978-0-7803-6583-4, DOI: 10.1109/ICSMC.2000.886041

## Description

### Domaine de l'invention

La présente invention concerne un système d'affichage visuel d'informations sur des objets réels pour des applications de réalité augmentée dans l'industrie, notamment pour la conception, la fabrication, l'assemblage ou la maintenance d'équipements techniques.

Différents systèmes de réalité augmentée sont connus pour étendre la perception de la réalité visuelle, et notamment des systèmes de visualisation par un écran de visualisation, une tablette ou des lunettes de réalité augmentée affichant une combinaison de capture de l'image de l'objet réel et de données sous forme d'image numérique de la maquette virtuelle de l'objet associé.

Ces solutions de réalité augmentée permettent d'améliorer l'efficacité des étapes de travail manuel dans la fabrication, l'assemblage et la maintenance et, en même temps, la qualité du travail. La transmission précise d'informations, par exemple l'état de planification numérique (modèle CAO) directement à un équipement, rend la transmission complexe et sujette à erreur des plans de construction en utilisant des modèles et d'autres instruments de mesure dispensables. Une comparaison de variance visuelle peut être réalisée à tout moment et de manière intuitive pour un utilisateur. De plus, des instructions de travail, par exemple des instructions pas-à-pas, peuvent être mises à disposition directement sur l'objet de travail ou dans le champ de vision de l'utilisateur, c'est-à-dire exactement là où elles sont réellement nécessaires. Des scénarii typiques d'application de l'invention comprennent des systèmes d'assistance d'ouvriers pour afficher des instructions d'assemblage et de maintenance et des informations pour l'assurance qualité. Par exemple, les positions d'assemblage ou les trous de forage peuvent être marqués avec précision ou des points de soudure ou des supports à vérifier peuvent être identifiés. Le système est également adapté pour fournir une assistance au personnel d'entretien sur place par des experts non-résidents.

### État de la technique

On connaît dans l'état de la technique le brevet américain US 9436993 B1 décrivant un système de réalité augmentée comprenant un système de traitement d'image ; un premier module d'imagerie, comprenant une ou plusieurs caméras, en communication avec le système de traitement d'image, dans lequel le système de traitement d'image est configuré pour :
- recevoir des données d'image secondaires provenant d'un second dispositif d'imagerie ;
- segmenter lesdites données d'image secondaires pour déterminer une première surface d'intérêt ;
- recevoir des données d'imagerie en temps réel à partir du premier module d'imagerie, les données d'imagerie en temps réel provenant de la ou des caméras comprenant des images d'une ou plusieurs : une seconde surface d'intérêt, un marqueur d'ancrage, et une orientation de la surface, une pluralité de marqueurs précoces ou tardifs, et des outils ;
- calculer une transformation d'enregistrement de la première surface d'intérêt par rapport à la seconde surface d'intérêt en utilisant un ou plusieurs parmi : le marqueur d'ancrage, la pluralité de marqueurs précoces ou tardifs, ou la seconde surface ;
- calculer un emplacement de suivi du premier module d'imagerie par rapport à la première surface d'intérêt en utilisant un ou plusieurs des éléments suivants : le marqueur d'ancrage, la pluralité de marqueurs précoces ou tardifs, la seconde surface ou des caractéristiques sur la seconde surface ; et
- créer une image améliorée en combinant des informations provenant des données d'imagerie en temps réel avec des informations correspondantes calculées à partir des données d'image secondaires sur la base de l'emplacement du premier module d'imagerie.

Pour assurer une parfaite synchronisation du référentiel de l'image virtuelle et d'un objet réel, il est connu par la demande de brevet EP 2715662 B1 un procédé de localisation d'une caméra et de reconstruction 3d dans un environnement partiellement connu. Ce procédé de localisation d'une caméra et de reconstruction 3D de l'environnement statique dans lequel elle évolue comporte un objet d'intérêt dont le modèle 3D est connu qui comprend les étapes suivantes :
- a/ calcul d'une pose initiale de la caméra dans l'environnement et d'une reconstruction initiale,
- b/ calcul de la pose de la caméra pour chaque nouvelle image par appariement de primitives 3D de l'environnement avec des primitives 2D de ladite image et reconstruction de primitives 3D de l'environnement par triangulation,
- c/ optimisation simultanée des poses de la caméra et des primitives 3D par minimisation d'une erreur de reprojection sur plusieurs images.

Le modèle 3D est une description géométrique de l'objet d'intérêt, l'erreur de reprojection ne comporte que deux types de termes, un premier type de termes lié à des primitives contraintes par le modèle 3D et un deuxième type de termes lié à des primitives de l'environnement autre que l'objet, et l'étape d'optimisation comprend une sous-étape d'association des primitives à l'environnement ou au modèle 3D.

On connaît aussi, dans l'état de la technique, le document US 2018/197336 A1, qui décrit un dispositif d'affichage permettant de commander un contenu de réalité augmentée (AR) afin de créer une sensation que des objets virtuels sont réels. Le dispositif d'affichage est configuré afin d'identifier un objet physique en tant qu'objet de repère et d'afficher une superposition sur l'objet de repère sur l'écran. Le dispositif est en outre configuré afin de suivre un mouvement de l'objet de repère et d'adapter la superposition sur l'objet de repère sur la base du mouvement de l'objet de repère.

En outre l'article publié par COSCO F et al: "Visuo-Haptic Mixed Reality with Unobstructed Tool-Hand intégration", IEEE Trans Visualization and Computer Graphics, vol. 19, no. 1, DOI: 10.1109/TVCG.2012.107, discute les problèmes d'obstruction visuelle et de désalignement introduits par les dispositifs haptiques courants, et propose une solution qui repose sur quatre étapes : segmentation basée sur la couleur de la main de l'utilisateur, segmentation basée sur le suivi du dispositif haptique, repeinture de l'arrière-plan à l'aide de modèles basés sur des images, et composition sans désalignement de la main de l'utilisateur.

### Inconvénients de l'art antérieur

Certaines solutions de l'art antérieur ne sont pas totalement satisfaisantes, car elles ne permettent pas de visualiser les informations de réalité augmentées sur les parties masquées de l'objet réel, par exemple par l'interposition entre la caméra et l'objet de la main de l'opérateur, du bras d'un robot, ou d'un outil de traitement.

Dans ces solutions de l'art antérieur, les informations numériques apparaissent en superposition, non pas avec l'objet, mais avec l'image de l'élément interposé entre la caméra et l'objet, ce qui enlève toute utilité de ces informations.

### Solution apportée par l'invention

L'invention vise à remédier à ces inconvénients.

À cet effet, selon un premier aspect de l'invention, il est proposé un procédé de visualisation d'une image combinant une image d'un objet réel provenant d'un système de capture vidéo avec des informations numériques provenant d'un modèle tridimensionnel de l'objet réel, selon la revendication 1.

Selon un deuxième aspect de l'invention, il est proposé un système selon la revendication 4.

Selon un troisième aspect de l'invention, il est proposé un produit programme d'ordinateur selon la revendication 5.

### Présentation des figures

D'autres données, caractéristiques et avantages de la présente invention apparaîtront à la lecture de la description de mises en oeuvre et de modes de réalisation nullement limitatifs, au regard de dessins annexés sur lesquels :
- la figure 1 est un schéma d'un système selon l'invention,
- la figure 2 est un schéma d'une image partiellement occultée avec un procédé selon l'art antérieur,

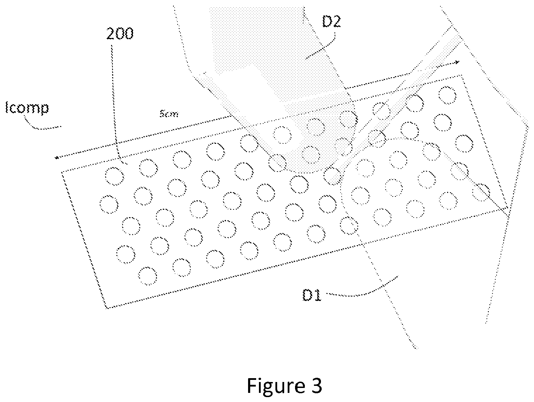

- la figure 3 est un schéma d'une image obtenue avec le procédé selon l'invention.

### Description des modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Il est maintenant décrit conjointement à la fois un mode de réalisation d'un système selon l'invention et un procédé selon l'invention.

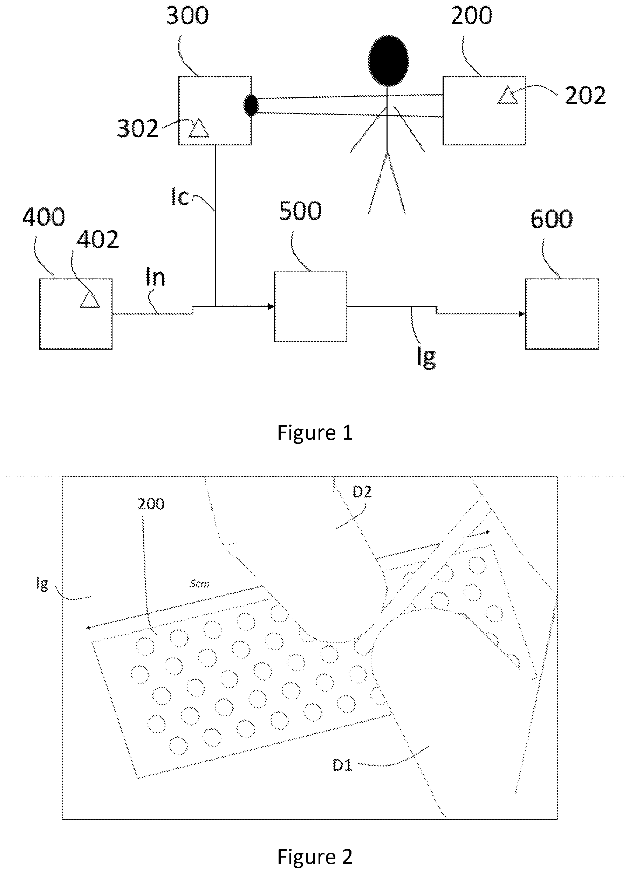

La figure 1 illustre un mode de réalisation d'un système 100 selon l'invention.

Il est schématiquement représenté un objet réel 200.

Un système de capture vidéo 300 peut capturer une ou plusieurs images de l'objet réel 200 et produire des images capturées Ic.

Un serveur d'information numérique 400 est schématiquement représenté sur la figure 1. Le serveur d'informations numérique comporte un enregistrement d'un modèle tridimensionnel de l'objet réel 200. Le serveur d'informations numériques 400 est configuré pour générer des informations numériques In.

On comprend que le modèle tridimensionnel pourrait être enregistré sur un autre support d'enregistrement qu'un serveur numérique, par exemple sur un dispositif portable, tel qu'un téléphone ou une tablette.

Un calculateur 500 est schématiquement représenté sur la figure 1. Le calculateur 500 est configuré pour : recevoir l'image capturée Ic par le système de capture vidéo 300, recevoir des informations numériques In relatives à l'objet réel 200 et générées par le serveur d'informations numériques 400, combiner l'image reçue avec les informations reçues.

Le calculateur 500 est en outre configuré pour mettre en oeuvre un traitement de recalage en temps réel d'un repère 402 du modèle tridimensionnel avec un repère 302 du système de capture vidéo 300 et un repère 202 de l'objet de l'objet réel 200. L'objet réel est représenté dans dans un environnement virtuel sous forme d'objet virtuel dans lequel les éléments sont représentés selon un repère qui lui est propre, le repère 402. L'objet réel est dans un environnement disjoint et placé selon un repère qui n'est pas directement lié à celui du monde virtuel, le repère 202. Le système de capture vidéo 300 observe le monde réel à travers une caméra qui permet de générer une image de la pièce dans son environnement. On peut voir dans l'image l'objet réel projeté sur le plan image et placé sur une zone dont les coordonnées sont reliée à un repère image, le repère 302. Grâce à la technologie de recalage il est possible d'identifier des éléments visuels pouvant être relié à la scène virtuelle et ainsi replacer dans un environnement virtuel les différents objets. Ainsi on sait placer la caméra à une position relative de l'objet virtuel de sorte que l'image produite par la caméra est alignée avec le modèle 3D virtuel tel que dans le monde réel. Cet alignement permet ensuite de réaliser une projection de la texture (image) de l'objet sur le modèle 3D virtuel, ce qui est expliqué par la suite.

Le calculateur 500 est aussi configuré pour générer une image Ig comportant une partie au moins des informations numériques en incrustation sur l'image capturée par ledit système de capture vidéo 300.

Il est en outre illustré sur la figure 1 un dispositif de visualisation 600. Le dispositif de visualisation 600 est configuré pour afficher l'image Ig générée par le calculateur 500.

L'image Ig peut être visualisée par un superviseur (non représenté) aux fins de contrôler divers paramètres de l'objet réel 200.

On comprend que lorsqu'un utilisateur U intervient sur l'objet, une partie de son corps peut s'interposer entre l'objet réel 200 et le système de capture vidéo 300.

Sur l'image capturée Ic par le système de capture vidéo 300, une partie de l'objet réel 200 est alors masquée par la partie du corps de l'utilisateur qui est interposée.

La figure 2 illustre l'image Ig affichée par le dispositif de visualisation 600, lorsque deux doigts D1, D2 de l'utilisateur U sont interposés entre le système de capture vidéo 300 et l'objet réel 200. On note également la présence de l'information, en réalité augmentée, de la taille de l'objet, de 5 cm dans l'exemple représenté. L'information de taille de l'objet provient des informations numériques In.

En ce cas, le superviseur ne peut pas contrôler en temps réel l'état de l'objet réel 200 une partie au moins de l'objet est masqué.

Le procédé selon l'invention comporte :
- une étape initiale Ei d'enregistrement d'une texture de référence de l'objet réel, et
- une étape d'analyse de l'image capturée IC par le système de capture vidéo 300.

Dans l'exemple représenté sur la figure 2, on note que l'objet réel comporte une texture 204 en pointillé. La texture enregistrée est notée T200.

L'étape d'analyse Ea comporte une extraction Ee des zones dites visibles Zv dont la texture correspond à la texture enregistrée T200, et des zones dites masquées Zm dont la texture diffère de la texture enregistrée T200.

L'étape d'analyse comporte en outre une étape de calcul Ec d'une image de synthèse par mélange :
- des zones masquées Zm dudit modèle tridimensionnel avec la texture de référence T200 correspondant aux zones masquées Zm,
- des zones visibles Zv dudit modèle tridimensionnel avec la texture extraite de l'image acquise Ic par le système de capture vidéo.

L'étape d'analyse comporte en outre une superposition des informations numériques In sur l'image de synthèse ainsi calculée.

Aussi, l'étape d'analyse Ea peut comporter, dans un mode de réalisation différent, une génération d'une image de synthèse à partir d'une part de l'image capturée, et d'autre part du modèle tridimensionnel de l'équipement texturé à partir de la texture enregistrée.

Aussi, l'étape de analyse Ea comporte une étape de calcul d'une image composite par mélange de l'image de synthèse et de l'image capturée.

La figure 4 illustre une image Icomp calculée par l'étape de calcul Ec. On observe que sur l'image Icomp, les zones préalablement masquées par les doigts de l'utilisateur ont été remplacées en utilisant le modèle tridimensionnel de l'équipement et la texture enregistrée T200. Ainsi, les zones ont été remplacées en utilisant le modèle tridimensionnel augmenté au préalable de la texture enregistrée T200.

Aussi, l'invention ne s'intéresse pas seulement à un plan du fond mais bien à la géométrie réelle de l'objet et sa texture qui sont ensuite utilisés pour effacer les occultations par impression sur l'objet occultant de la texture apprise en amont.

Dans les méthodes selon l'art antérieur, il existe des techniques d'estimation de fond où le niveau de couleur / intensité d'un pixel est estimé avec des méthodes probabilistes et qui sont le résultat d'une intégration temporelle des images permettant de prédire ce qui est relatif au fond et ce qui est en mouvement et à ignorer. Il n'est pas possible d'appliquer ces méthodes lorsque l'obstacle est statique, le modèle finissant par l'intégrer comme un objet du fond. Selon l'invention, la texture pré enregistrée et correctement recalée est placée en sur impression, quelle que soit la dynamique de la scène.

Bien sûr, l'invention n'est pas limitée aux exemples qui viennent d'être décrits et de nombreux aménagements peuvent être apportés à ces exemples sans sortir du cadre de l'invention, telle que définie par les revendications. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de visualisation d'une image combinant une image capturée (Ic) d'un objet réel (200) provenant d'un système de capture vidéo (300) avec des informations numériques (In) provenant d'un modèle tridimensionnel de l'objet réel enregistré, comportant :
- un traitement de recalage en temps réel d'un repère (402) dudit modèle tridimensionnel avec un repère (302) du système de capture vidéo et un repère (202) dudit objet réel,
- une visualisation par affichage d'une partie au moins desdites informations numériques en incrustation sur l'image capturée par ledit système de capture vidéo à partir du traitement de recalage en temps réel,
- une étape initiale (Ei) d'enregistrement d'une texture (T200) de référence dudit objet réel, et
- une étape d'analyse (Ea) de l'image (Ic) capturée par le système de capture vidéo,
ladite étape d'analyse comportant :
- une extraction (Ee) des zones dites visibles (Zv) dudit modèle tridimensionnel dont la texture correspond à la texture enregistrée (T200), et des zones dites masquées (Zm) dudit modèle tridimensionnel dont la texture diffère de la texture enregistrée (T200), et
- une étape de calcul (Ec) d'une image de synthèse par mélange des zones masquées (Zm) dudit modèle tridimensionnel avec la texture enregistrée (T200) correspondant aux zones masquées (Zm), et des zones visibles (Zv) dudit modèle tridimensionnel avec la texture extraite de l'image capturée (Ic) dans les zones visibles (Zv), et de calcul et de visualisation d'une image composite (Icomp) par mélange de l'image de synthèse et de l'image capturée (Ic).

2. Procédé selon la revendication précédente, comportant en outre une superposition desdites informations numériques sur l'image composite ainsi calculée.

3. Procédé de visualisation selon l'une quelconque des revendications précédentes, dans lequel lors de l'étape de calcul de l'image composite par mélange, l'image de synthèse est appliquée au-dessus de l'image capturée, avec une transparence égale à un seuil prédéterminé.

4. Système comportant :
- un système de capture vidéo,
- un support d'enregistrement comportant une maquette numérique,
- un objet réel associé à la maquette numérique,
- un module de visualisation configuré pour mettre en un procédé selon l'une quelconque des revendications 1 à 3.

5. Produit programme d'ordinateur, chargeable directement dans la mémoire interne d'un ordinateur, comprenant des portions de code de logiciel pour l'exécution des étapes du procédé de visualisation selon l'une des revendications 1 à 3, lorsque ledit programme est exécuté sur un système selon la revendication 4.

## Patentansprüche

1. Verfahren zum Visualisieren eines Bildes, das ein erfasstes Bild (Ic) eines realen Objekts (200), das von einem Videoerfassungssystem (300) stammt, mit digitalen Informationen (In) kombiniert, die von einem dreidimensionalen Modell des gespeicherten realen Objekts stammen, aufweisend:
- eine Registrierungsbearbeitung in Echtzeit eines Bezugspunktes (402) des dreidimensionalen Modells mit einem Bezugspunkt (302) des Videoerfassungssystems und einem Bezugspunkt (202) des realen Objekts,
- ein Visualisieren durch Anzeige mindestens eines Teils der digitalen Informationen als Einblendung in dem von dem Videoerfassungssystem erfassten Bild anhand der Registrierungsbearbeitung in Echtzeit,
- einen Anfangsschritt (Ei) des Aufzeichnens einer Bezugstextur (T200) des realen Objekts, und
- einen Schritt des Analysierens (Ea) des von dem Videoerfassungssystem erfassten Bildes (Ic), wobei der Analyseschritt Folgendes aufweist:
- eine Extraktion (Ee) von sogenannten sichtbaren Zonen (Zv) des dreidimensionalen Modells, dessen Textur der aufgezeichneten Textur (T200) entspricht, und von sogenannten verdeckten Zonen (Zm) des dreidimensionalen Modells, dessen Textur sich von der aufgezeichneten Textur (T200) unterscheidet, und
- einen Schritt des Berechnens (Ec) eines Synthesebilds durch Mischen der verdeckten Zonen (Zm) des dreidimensionalen Modells mit der aufgezeichneten Textur (T200) entsprechend den verdeckten Zonen (Zm), und der sichtbaren Zonen (Zv) des dreidimensionalen Modells mit der aus dem erfassten Bild (Ic) extrahierten Textur in den sichtbaren Zonen (Zv), und des Berechnens und des Visualisierens eines zusammengesetzten Bildes (Icomp) durch Mischen des Synthesebilds und des erfassten Bildes (Ic).

2. Verfahren nach dem vorhergehenden Anspruch, ferner aufweisend eine Überlagerung der digitalen Informationen auf das so berechnete zusammengesetzte Bild.

3. Visualisierungsverfahren nach einem der vorhergehenden Ansprüche, wobei beim Schritt des Berechnens des zusammengesetzten Bildes durch Mischen das Synthesebild über dem erfassten Bild aufgebracht wird mit einer Transparenz gleich einem vorbestimmten Schwellenwert.

4. System, aufweisend:
- ein Videoerfassungssystem,
- ein Aufzeichnungsmedium, aufweisend eine digitale Vorlage,
- ein reales Objekt, das der digitalen Vorlage zugeordnet ist,
- ein Visualisierungsmodul, konfiguriert, um in einem Verfahren nach einem der Ansprüche 1 bis 3 eingesetzt zu werden.

5. Computerprogrammprodukt, das direkt in den internen Speicher eines Computers geladen werden kann, umfassend Softwarecodeabschnitte für die Ausführung der Schritte des Visualisierungsverfahrens nach einem der Ansprüche 1 bis 3, wenn das Programm auf einem System nach Anspruch 4 ausgeführt wird.

## Claims

1. A method for visualising an image combining a captured image (Ic) of a real object (200) originating from a video capture system (300) with digital information (In) originating from a three-dimensional model of the recorded real object, comprising:
- real-time registration processing of a reference (402) of said three-dimensional model with a reference (302) of the video capture system and a reference (202) of said real object,
- visualising by displaying at least some of said digital information inlayed on the image captured by said video capture system based on the real-time registration processing,
- an initial step (Ei) of recording a reference texture (T200) of said real object, and
- a step (Ea) of analysing the image (Ic) captured by the video capture system, with said analysis step comprising:
- extracting (Ee) so-called visible zones (Zv) from said three-dimensional model whose texture corresponds to the recorded texture (T200) and so-called masked zones (Zm) from said three-dimensional model whose texture differs from the recorded texture (T200), and
- a step (Ec) of computing a synthesis image by mixing the masked zones (Zm) of said three-dimensional model with the recorded texture (T200) corresponding to the masked zones (Zm), and the visible zones (Zv) of said three-dimensional model with the texture extracted from the captured image (Ic) in the visible zones (Zv), and computing and visualising a composite image (Icomp) by mixing the synthesis image and the captured image (Ic).

2. The method according to the preceding claim, further having superimposing said digital information onto the composite image thus computed.

3. The visualisation method according to any one of the preceding claims, wherein, during the step of computing the composite image by mixing, the synthesis image is applied over the captured image with a transparency that is equal to a predetermined threshold.

4. A system, comprising:
- a video capture system,
- a recording medium comprising a digital mock-up,
- a real object associated with the digital mock-up,
- a visualisation module configured to implement a method according to any one of claims 1 to 3.

5. A computer program product that can be directly loaded into the internal memory of a computer, comprising portions of software code for executing the steps of the visualisation method according to one of claims 1 to 3 when said program is executed on a system according to claim 4.
